Europäisches Patentamt

European Patent Office

Office européen des brevets

(11) Publication number: **0 469 698 A1**

## EUROPEAN PATENT APPLICATION

(21) Application number: **91303558.0**

(22) Date of filing: **22.04.91**

(51) Int. Cl.⁵: **C08L 27/06**, C08J 3/00

(30) Priority: **26.07.90 US 559125**

(43) Date of publication of application:
**05.02.92 Bulletin 92/06**

(84) Designated Contracting States:
**BE CH DE ES FR GB IT LI LU NL SE**

(71) Applicant: **GENCORP INC.**
**175 Ghent Road**
**Fairlawn, Ohio 44333-3300(US)**

(72) Inventor: **Gurganus, Cecil R.**
**6411 Cynthiana Road**
**Evansville, Indiana 47712(US)**
Inventor: **Horning, Francis L.**
**2410 Bellemeade Avenue**
**Evansville, Indiana 47714(US)**
Inventor: **Sanford, Roy C.**
**R.R. No. 2**
**Dale, Indiana 47523(US)**

(74) Representative: **Stoner, Gerard Patrick et al**
**Mewburn Ellis 2 Cursitor Street**
**London EC4A 1BO(GB)**

(54) **Flexible polyvinyl chloride compounds.**

(57) A gasketing compound with low plasticiser migration comprises a polyvinyl chloride resin with an inherent viscosity at or above about .92 and a porosity at or above 24 cubic centimeters per gram, and a polymeric plasticiser. The gasketing compound is extruded to form a gasket which produces little or no marring of the paint surface with which the gasket is in contact.

EP 0 469 698 A1

This invention relates to flexible polyvinyl chloride compounds.

Flexible polyvinyl chloride compounds have many applications in sealing and gasketing. Such compounds are, for example, used to form the gaskets which seal refrigerator and freezer doors. The flexible polyvinyl chloride compounds used to seal refrigerator and freezer doors must be compatible with the surfaces with which they will come in contact. The gasketing compound must not change the properties of the in-contact surface, or mar or otherwise alter the appearance of the in-contact surface and especially not stick, soften the paint, nor cause the paint to adhere to the gasket.

Manufacturers of refrigerators and freezers desire to use pre-painted steel in fabricating their products. Such pre-painted steel is subjected to forming operations which produces sharp bend radii in the paint layer as the steel is formed into the desired shape. Small cracks (micro-cracks) in the painted surface may develop in the vicinity of the sharp bend radii. Upon exposure to the environment, these micro-cracks begin to rust and produce a surface mottled with rust and streaks of rust.

To address this micro-crack phenomenon, paint manufacturers produced "softer" paints which allow the paint film to stretch around the sharp bends and maintain a continuous painted surface. Such "softer" paints which eliminated the micro-cracking phenomenon demonstrated incompatibility with existing gasket compositions.

The inventors were concerned to make a new flexible polyvinyl chloride gasketing material with low plasticiser migration and processes for making such material and gaskets. We find that such gaskets may significantly reduce marring of pre-painted surfaces which they contact.

According to the invention, a compound suitable for a gasketing compound with low plasticiser migration comprises polyvinyl chloride resin and a flexibilising polymeric plasticiser. The polyvinyl chloride resin in the compound of the present invention has an inherent viscosity at or above .92 and a porosity at or above 24 cubic centimeters per gram. Polyvinyl chloride resin with an inherent viscosity below about .92 and a porosity below about 24 cubic centimeters per gram will not produce the gasketing compounds of the present invention which exhibit low plasticiser migration and hence reduced marring effect on pre-painted surfaces. The PVC compound may be pelletised with a polymeric plasticiser, such as nitrile rubber, Hytrel, ethylvinyl acetate, Dupont Elvaloy, or a polymeric polyestic plasticiser. The pelletised compound should be produced under operating conditions which produce pellets without surface defects, inconsistency of pellet size and inconsistent physical properties. Pelletised compounds which contain unplasticised polyvinyl chloride resin and unabsorbed plasticiser will result in compounds outside the scope of the present invention which will increase marring properties and exhibit other unacceptable surface conditions when extruded into gaskets. Processing aids may be added to the gasketing compound of the present invention prior to the pelletising. The pelletised gasket composition is then extruded to form a gasket. The gasket should be made under extrusion condition which produce an extruded profile without overfluxed material, with acceptable cross section dimensions, and without low physical property characteristics.

Preferably the resin inherent viscosity is 1 or more, most preferably at least 1.2. The preferred porosity is 0.3 or more, most preferably at least 0.4 cc/gram.

In general, flexible PVC compounds have been plasticised with a variety of plasticisers; monomeric, polymeric and mixtures of the two, in either solid or liquid form. The plasticiser modifies the compound hardness. However, it is generally not totally solubilised in the resin and in time may migrate out according to time, temperature, humidity etc. If the plasticiser migrates into a neighboring painted surface, it can soften the paint.

In the present work, we have found that a selection of plasticiser type viz. polymeric, combined with PVC-type resins of higher inherent viscosity and porosity, enables reduction of this harmful migration. Also, we have found particular plasticisers that give especially good results, viz. copolymers with adipic acid.

We have found that a compound with low plasticiser migration which, when processed into a gasket which may be used on refrigerators and freezers, significantly reduces or eliminates the marring of the pre-painted contact surface. The flexible compound comprises a polyvinyl chloride resin and a polymeric plasticiser. The gasketing compound is pelletised, or alternatively, powder dry-blended. The gasketing compound whether pelletised or alternatively powder dry-blended is then extruded into a profile which may be used to make a gasket to seal refrigerator and freezer doors and which eliminates or significantly reduces marring.

Gasket compositions may be ranked by their effect in producing a marring of the pre-painted contact surface using a proprietary test procedure (Procedure I) designed to accelerate the marring phenomenon. Compositions were tested according to the following two procedures. In Procedure I, the gasket composition is put into contact with a pre-painted test panel at a contact pressure of 3.5 to 4.5 g/cm$^2$ (0.05 to 0.065 psi) and continuously subjected to 70°C ± 1° (158°F ± 2°) for 42 days. In Procedure II, the gasket composition is put in contact with a pre-painted test panel at a contact pressure of 3.5 to 4.5 g/cm$^2$ (.05 to

.065 psi) and continuously subjected to 43°C (110°F) and 100% humidity for 42 days. The panels were then rated on a scale of 0 to 10, with 0 representing no improvement in marring over gasket composition and 10 representing the absence of any marring.

The polyvinyl chloride resin in the gasketing compound has an inherent viscosity at or above about .92. Inherent viscosity is an indirect measurement of the molecular weight of the polyvinyl chloride resin. The polyvinyl chloride resin in the compound of the present invention also has a porosity at or above 24 cubic centimetre per gram. Experimental results using Procedure I, shown in Table I demonstrate that as the inherent viscosity and the porosity of the polyvinyl chloride resin increases and other composition parameters are held constant in the gasket composition, the marring of the contact surface by the gasket is decreased.

Polyvinyl chloride resins of different inherent viscosities may be blended together to produce a composite which, when processed into a gasket composition of the present invention, produces gasket compositions exhibiting increased resistance to mar of pre-painted surfaces. As Table II demonstrates, the polyvinyl chloride resin with the greatest average inherent viscosity produces a gasket composition with the greatest resistance to marring.

The polyvinyl chloride containing resin used to produce the gasket compositions of the present invention may be a copolymer or a terpolymer. For example, vinyl chloride monomer co-polymerised with vinyl acetate has an increased porosity at a substantially similar inherent viscosity, and can produce a composition with improved mar resistance.

Polymeric plasticisers preferably having low taste and odour, together with the polyvinyl chloride resin, are comprised in the composition of the invention. Polymeric plasticisers include nitrile rubbers, ethylene vinyl acetate, urethanes, polyesters and other polymers which will plasticise polyvinyl chloride. Table III demonstrates the effects of a number of polymeric plasticisers on mar resistance. Polymeric polyester plasticisers formed from adipic acid and propylene glycol having a molecular weight of about 5000 grams per mole provide improved mar resistance in a gasket composition. Polymeric polyester plasticisers formed from adipic or glutaric acid and 1,3-butylene glycol having a molecular weight from about 1500 to about 2000 produces a gasket composition embodying the invention, with increased resistance to marring. The preferred polymeric plasticiser is a polyester formed from adipic acid and neopentyl glycol having a molecular weight from about 1500 to about 2000. Higher molecular weight polyester plasticisers impart further resistance to marring to the gasket composition. The gasket compound includes polymeric plasticiser in an amount up to 80 parts per hundred parts of polyvinyl chloride or polyvinyl chloride copolymer resin.

Processing aids may be added to the composition to aid in processing of the gasket composition. Commercially available processing aids such as stearic acid, Allied Chemical Company's AC-1702 and AC-6A and Kenrich L-38 do not affect the mar resistance of the gasket composition when employed at levels commonly used by those skilled in the art. Table III lists processing aids, their use levels, and their effect on marring pre-painted surfaces by the gasket compound in which they are formulated. As Table III demonstrates, Dupont's Elvaloy 742 and U.S.I.'S ethylene vinyl acetate may produce a composition with improved resistance to marring.

The gasket composition comprised of the polyvinyl chloride resin and the polymeric plasticiser may be powder dry-blended prior to extrusion. Powder dry-blending may be accomplished by mixing the composition in a high intensity mixer. In a Henschel-type high intensity mixer, the plasticiser temperature prior to blending is preferably in the approximate range of 50°C-60°C (120°F-140°F) and the resin temperature prior to blending is preferably about 43°C-65°C (110°F-150°F). Total mixing time for the powder dry blending is preferably from about eight to about twelve minutes.

Alternatively, the composition may be pelletised prior to extrusion. Pelletising may be accomplished in any pelletiser under parameters which result in pellets, which, when extruded, exhibit improved resistance to marring. The process of pelletising is one in which the parameters employed in the process influence the properties of the final extruded gasketing compound. Generally, the variables of the twin-screw pelletiser may span a range of specifications which will yield extruded gasketing compounds having increased resistance to marring. Pelletising is preferably accomplished in a twin screen pelletiser, such as a Werner Pfleiderer Kombi-Plast Model KP-800. The temperature in the first zone of the pelletiser is preferably about 90°C-125°C (200°F-260°F). The temperature in the second zone is preferably about 90°C-125°C (200°F-260°F). The temperature in the third zone is preferably about 90°C-125°C (200°F-260°F). The temperature in the fourth zone is preferably about 70°C-105°C (160°F-220°F). The torque is preferably from about 40% to about 80%. The screw speed is preferably from about 140 revolutions per minute (rpm) to about 200 rpm. The melt temperature is preferably about 135°C-175°C (280°F-350°F). The output is preferably from about 550 to about 900 kg (1200-2000 pounds) per hour. The dry-blend compound temperature is preferably from about 38°C-105°C (100°F-220°F). As the inherent viscosity of the polyvinyl chloride resin increases, the melt temperature of the compound must be increased to produce pellets which, when extruded, provide increased resistance to marring of pre-painted surfaces.

After pelletising or powder dry blending, the gasket composition may be extruded into extruded profile lengths subsequently cut to the desired length, a magnetic strip added and the lengths joined at the mitered ends to produce a gasket for use in refrigerators and freezers. Extrusion may be accomplished under any set of parameters which produces a gasket compound which exhibits increased resistance to marring. The preferred extrusion profile for pelletised gasket compositions of the present invention is carried out on an 89 mm (3.5") diameter, 24:1 length-to-diameter ratio, single screw National Rubber Machinery Corporation Extruder, employing the parameters within the preferred ranges. The preferred temperature range in the first zone is about 115°C-155°C (240°F-310°F). The preferred range in the second zone is about 115°C-160°C (240°F-320°F). The preferred temperature range in the third zone is about 115°C-160°C (240°F-320°F). The preferred temperature range in the fourth zone is about 115°C-155°C (240°F-310°F). The preferred temperature range in the fifth zone is about 115°C-152°C (240°F-305°F). The preferred range in the sixth zone is about 115°C-145°C (240°F-290°F). The preferred temperature range in the seventh zone is about 125°C-138°C (260°F-280°F). The preferred temperature range in the eighth zone is about 125°C-138°C (260°F-280°F). The preferred melt temperature is about 138°C-177°C (280°F-350°F). The preferred screw speed is from about 30 rpm to about 50 rpm. The preferred mesh screen pack is 1(20), 2-(40's), and 2(80's). The preferred barrel pressure is from about 6200 to about 10400 kPa (900 to about 1500 psi) at the sixth zone. The preferred output is from about 90 to about 160 kg (200 to 350 pounds) per hour. The preferred line speed is from about 9 to about 21 metres per minute (about 30 to 70 feet per minute).

The following examples illustrate the present invention, but are not intended to limit the claims in any manner whatsoever.

## EXAMPLES

### EXAMPLE I

#### a. Compounding Process

The following raw materials were weighed and mixed in a high intensity (Henschel) mixer.

| Raw Materials | Parts per Hundred Resin |
|---|---|
| Geon 31 PVC resin | 75.00 |
| Geon 3400 PVC resin | 25.00 |
| Epoxidised Soybean Oil Union Carbide | 16.77 |
| Huls 910 Polymeric Plasticiser | 67.18 |
| English Clay Calcium Carbonate | 50.00 |
| Witco Zinc Complex Stabiliser | 1.50 |
| Morton Thiokol Fungicide (SB-1) | 1.45 |
| Colour Pigments | 5.53 |
| | 242.43 |

Plasticisers (Huls 910 and Union Carbide ES0) were preheated to 140°F. Resins and stabilisers were added to mixer. Mixer's blades were turned on low speed. After 1 minute mixing, the pre-heated plasticisers were slowly added to the mixer. After all plasticisers were added, the mixer blade speed was changed from low to high speed. Raw materials were mixed until batch temperature reached 160°F. Pigments and fungicides were added to mixer with blades still on high speed. When the batch temperature reached 200°F the blade speed was reduced to low. The compound was mixed for 3 minutes on low speed. The speed of the blade was then changed to high. Calcium carbonate filler was added and compound batch was mixed until a 220°F temperature achieved.

The batch (powder dry-blended compound) was discharged from the mixer at a 220°F - 230°F batch temperature.

b. Pelletising process

The powder dry-blended compound was then converted into pellets with the aid of the Kombi-Plast Model KP800 Werner and Pfleiderer Pelletising System. Machine control conditions were as follows:

| Temperature Zone | Zone Temperature |
| --- | --- |
| Zone 1 | 230°F |
| Zone 2 | 230°F |
| Zone 3 | 230°F |
| Zone 4 | 180°F |
| Zone 5 | 180°F |
| Zone 6 | 240°F |

Twin screw speed:     180 RPM
Single screw speed:   Fast
Crammer speed:        Adjusted to maintain 60%-70% torque

c. Extrusion Process

Pellets produced were then extruded into a refrigeration door gasket profile. The extruder used was a 3.5 inch (24:1 L/D) NRM machine with a Barr II Screw and Maddox Screw Tip. Machine conditions were as follows:

| Temperature Zone | Actual Machine Temperature |
|---|---|
| Zone 1 | 280°F |
| Zone 2 | 280°F |
| Zone 3 | 290°F |
| Zone 4 | 296°F |
| Zone 5 | 300°F |
| Zone 6 | 280°F |
| Zone 7 | 285°F |
| Die temperature | 285°F |
| Melt temperature | 320°F |
| Pressure (psi) at Zone 6 | 1500 |
| RPM Screw | 50 |
| Line Speed (feet/min.) | 45 |
| Screw | Barr II Maddox Tip |
| Screen Pack | 1 (20 mesh), 2 (40's mesh), 2 (80's mesh) |

c. Testing Process

Refrigeration door gasket profiles produced were then evaluated for mar resistance to "soft" pre-painted steel for refrigerators. Procedures used were:

A) Procedure I

Sections (1.5 inch long) of gaskets were placed in contact with pre-painted steel test panels. The applied force on the thin section-top portion of the magnetic sleeve was .057 to .065 pound per square inch or a section of standard refrigeration magnetised magnet profile 1.5 inches long.

B) Procedure II

One assembly (vinyl gasket on pre-painted steel) was then placed in an oven pre-set at 158°F. Another assembly was placed in 100°F/100% relative humidity chamber. Exposure time was 42 days of continuous exposure. After exposure time, assemblies were removed from test chambers and allowed to stabilise to 70° +/-2°F.

When assemblies had stabilised to 70° +/- 2°F, the PVC profiles were removed from the test panels. Painted panels were then evaluated for degree of marring created by the PVC extruded profiles. Table Example I gives the result of the test. Results indicate that compound produced per this example when extruded into refrigeration gasket profiles have commercially acceptable non-marring properties to paints.

Table Example I

| | 158°F | | 100°F and 100% R.H. | |
|---|---|---|---|---|
| | Adhesion | | Adhesion | |
| | to paint | Marring | to paint | Marring |
| 1. Standard Appliance Grade PVC | 2,2,3 | 3,3,3 | 1,1,1 | 1,1,1 |
| 2. Experimental Compound | 0,0,0 | 0,0,0 | 0,0,0 | 0,0,0 |

Key   0 = None   1 = Slight    2 = Moderate   3 = Bad

This example achieved excellent results using a blend of high and medium MW PVC resins, with high porosity, to give a good retention of plasticiser. Also the particularly preferred plasticisers, adipic/neopentyl polymer, was used as can be seen with reference to Table IV.

EXAMPLE II

Material compounding, sample preparation and test procedures were identical to Example I. The raw materials used were as follows:

| Raw Materials | Parts per Hundred Resin |
|---|---|
| Geon 31 PVC Resin | 100.00 |
| Epoxidised Soybean Oil Union Carbide | 20.00 |
| Quantum 9720 Polymeric Plasticiser | 80.00 |
| English Clay Calcium Carbonate | 50.00 |
| Witco Zinc Complex Stabiliser | 1.50 |
| Morton Thiokol Fungicide (SB-1) | 1.54 |
| Colour Pigments | 5.53 |
| | 258.57 |

As indicated by the above tabulated test results, Table Example II, if practised, will produce commercially unacceptable marring of pre-painted steel.

## Table Example II

| | Test Condition 158°F | | Test Condition 100°F and 100% Relative Humidity | |
|---|---|---|---|---|
| | Adhesion to paint | Marring | Adhesion to paint | Marring |
| 1. Standard Appliance Grade PVC | 2,2,3 | 3,3,3 | 1,1,1 | 1,1,1 |
| 2. Experimental Compound | 3,3,3 | 3,3,3 | 3,3,3 | 3,3,3 |

Key  0 = None  1 = Slight  2 = Moderate  3 = Bad

The results here were not good because of combinations of two less preferred features. Namely, a PVC resin of only moderate viscosity and porosity, with a low-molecular weight polymeric plasticiser which in itself was found to show less mar resistance.

EXAMPLE III

Material compounding, sample preparation and test procedures were identical to Example I. The raw materials used were as follows:

| Raw Materials | Parts per Hundred Resin |
|---|---|
| Geon 31 PVC Resin | 100.00 |
| Epoxidised Soybean Oil Union Carbide | 16.00 |
| Quantum 9720 Polymeric Plasticiser | 64.00 |
| English Clay Calcium Carbonate | 50.00 |
| Witco Zinc Complex Stabiliser | 1.50 |
| Morton Thiokol Fungicide (SB-1) | 1.54 |
| Colour Pigments | 5.53 |
| Ethylene Co-polymer | 80.00 |
| | 318.57 |

As shown in Table Example III, results indicate that compound produced according to Example III will produce unacceptable marring of pre-painted steel.

## Table Example III

| | Test Condition 158°F | | Test Condition 100°F and 100% Relative Humidity | |
|---|---|---|---|---|
| | Adhesion to Painted Panel | Marring to Paint | Adhesion to Painted Panel | Marring to Paint |
| 1. Standard Appliance Grade PVC | 2,2,3 | 3,3,3 | 1,1,1 | 1,1,1 |
| 2. Experimental Compound | 3,3,3 | 2,2,2 | 3,3,3 | 2,2,2 |

Key    0 = None   1 = Slight    2 = Moderate   3 = Bad

The marring results here were however better than in Example II, since a solid polymer was used to replace partly the azelaic/propylene glycol plasticiser.

9

## TABLE I

| Resins Evaluated | Porosity cc/gram | Inherent Viscosity | Procedure I Effect on paint marring at same durometer hardness Scale * 0-10 |
|---|---|---|---|
| Pipe Grade PVC Resin | .24 | .92 | 0 |
| Geon 30 | .34 | 1.02 | 3 |
| Geon 31 | .34 | 1.02 | 3 |
| Georgia Gulf 1100 PVC | .34 | 1.02 | 3 |
| Co-Polymer | .45 | .99 | 3 |
| Geon 3500 | .45 | 1.34 | 7 |
| Geon 3400 | .47 | 1.34 | 7 |

Scale * 0 - 10

    0 = No improvement to marring.

    3 = Improvement was slight.

    7 = Improvement was good - indicating the impact of

        PVC's resin porosity and I.V. on paint marring.

TABLE II

| Blends of resins with different I.V.'s (Inherent Viscosity) evaluated | Ratio Blend | Effect on paint marring at the same durometer hardness Scale * 0 - 10 |
|---|---|---|
| 1.02 | 100% | 3 |
| 1.02/1.34 | 75%/25% | 4 |
| 1.02/1.34 | 50%/50% | 5 |
| 1.02/1.34 | 25%/75% | 6 |
| 1.34 | 100% | 7 |

Scale * 0 - 10

0 = No improvement.

10 = No marring to painted appliance test panels.

## TABLE III

| Types Evaluated | Use Level PHr | Effect on marring same durometer hardness formulation Scale * 0-10 |
|---|---|---|
| Stearic Acid | 0-.5 | 0 |
| AC-1720 (Allied) | 0-.5 | 0 |
| AC-6A (Allied) | 0-.5 | 0 |
| CPE (Dow's 3623) | 0-10 | 0 |
| Coupling Agent (Kenrich L-38) | 0-1.39 | 0 |
| Acrylic Modifier (Rohm & Haas 1K-120N) | 0-5 | 0 |
| Lubricant (Loxiol G-70) | 0-2 | 0 |
| Kenamide S Witco Corp. | 0-2 | 0 |
| Dupont Elvaloy 742 | 0-80 | 5 |
| USI's EVA | 0-30 | 10 |
| Emery 3004 Hydrocarbon | 1-3 | 0 |
| Emery 3006 Hydrocarbon | 1-3 | 0 |
| Emery 3008 Hydrocarbon | 1-8 | 0 |

Scale * 0-10

   0 = No improvement.

   10 = No marring.

TABLE IV

| Plasticiser (Polymeric Permanent Type) | Acid Type | Glycol Type | Molecular weight (grams/mole) | Effect on marring at same durometer Scale * 0-10 |
|---|---|---|---|---|
| Quantum 9776 | Adipic | 1,3 Butylene | 1500-2000 | 4 |
| Quantum 9789 | Adipic | Propylene | 5000 | 2 |
| Quantum 9720 | Azaleic | Propylene | 500 | 0 |
| Quantum 9752 | Phthlatic | Neopentyl Propylene | 1000-2000 | 0 |
| Quantum 9751 | Ter Phthlatic | Neopentyl Propylene | 1000-2000 | 0 |
| Quantum 9761 | Adipic | 1,3 Butylene | 1500-2000 | 0 |
| Quantum 9755 | Adipic | Neopentyl | 1500-2000 | 6 |
| Quantum 9788 | Sebacic | Propylene | 5000 | 0 |
| C P Hall P550 | Glutaric | | 1500-2000 | 2 |
| Huls 910 | Adipic | Neopentyl | 1500-2000 | 6 |

Scale * 0-10

    0 = No improvement.

   10 = No marring of appliance painted panels.

**Claims**

1.   A polymeric composition comprising:
    (a) one hundred parts of a vinyl chloride containing resin having an inherent viscosity of greater than about .92 and a porosity greater than about 24 cc/gm, and
    (b) up to about 80 parts per 100 parts of resin of a polymeric plasticiser,
   which is powder dry blended or pelletised to give a composition having low plasticiser migration.

2.   A polymeric composition comprising:
    (a) one hundred parts of a vinyl chloride containing resin having an inherent viscosity of greater than about .92 and a porosity greater than about 24 cubic centimeters per gram,
    (b) up to about 80 parts per 100 parts of resin of a polymeric polyester plasticiser formed from adipic acid and neopentyl glycol, said plasticiser having an average molecular weight of from about 1500 to about 2000, and
   wherein the polymeric polyester plasticiser is dispersed in the resin.

3.   A method of manufacturing a gasketing compound comprising the steps of:

(a) pelletising or powder dry blending

(1) 100 parts of a polyvinyl chloride resin having an inherent viscosity at or above about .92 and a porosity at or above 24 cubic centimeters per gram,

(2) up to about 80 parts per hundred of resin of a polymeric plasticiser, and

(b) extruding the pelletised or blended composition to form a profile that is converted into a complete gasket with low plasticiser migration.

4. A method of manufacturing a gasketing compound according to claim 3, comprising

(a) conducting the pelletising in a twin-screw pelletiser wherein:

(1) the temperature in a first zone is from about 200° F to about 260° F;

(2) the temperature in a second zone is from about 200° F to about 260° F;

(3) the temperature in a third zone is from about 200° F to about 260° F;

(4) the temperature in a fourth zone is from about 160° F to about 220° F;

(5) the torque is from about forty percent (40%) to about eighty percent (80%);

(6) the screw speed is from about 140 RPM to 200 RPM;

(7) the melt temperature is from about 280° F to about 350° F;

(8) the output is from about 1200 to about 2000 pounds per hour;

(9) the dry blended compound temperature is from about 100° F to about 220° F; and

(b) extruding the pelletised composition in a single screw extruder under the following conditions:

(1) the temperature in a first zone is from about 240° F to about 310° F;

(2) the temperature in a second zone is from about 240° F to about 320° F;

(3) the temperature in a third zone is from about 240° F to about 320° F;

(4) the temperature in a fourth zone is from about 240° F to about 310° F;

(5) the temperature in a fifth zone is from about 240° F to about 305° F

(6) the temperature in a sixth zone is from about 240° F to about 290° F

(7) the temperature in a seventh zone is from about 260° F to about 280° F;

(8) the temperature in an eighth zone is from about 260° F to about 280° F;

(9) the melt add temperature is from about 280° F to about 350° F;

(10) the screw speed is from about 30 rpm to about 50 rpm;

(11) the screen pack mesh is 1(20), 2(40's), 2(80's);

(12) the barrel pressure is from about 900 to about 1500 psi at Zone 6;

(13) the output is from about 200 to about 250 pounds per hour;

(14) the line speed is from about 30 to about 70 feet per minute.

5. A method according to claim 3 or 4 wherein the polyvinyl chloride resin has a porosity of between about 45 cc/gram to about 47 cc/gram.

6. A method according to claim 3, 4 or 5 wherein the polyvinyl chloride resin is co-polymerised with vinyl acetate.

7. A composition according to claim 1 wherein the plasticiser is

(i) a polyester plasticiser formed from adipic acid and 1,3-butylene glycol and wherein the polyester plasticiser has a molecular weight from about 1500 to about 2000;

(ii) a polyester plasticiser formed from adipic acid and propylene glycol and wherein the polyester plasticiser has a molecular weight of about 5000; or

(iii) a polyester plasticiser formed from glutaric acid and propylene glycol and wherein the polyester plasticiser has a molecular weight of from about 1500 to about 2000.

8. A method according to claim 3 or claim 4 wherein:

(i) the polymeric plasticiser is a polyester formed from an adipic acid and a neopentyl glycol having an average molecular weight in the range of from about 1500 grams/mole to about 5000 grams/mole;

(ii) the polymeric plasticiser is a polyester plasticiser formed from adipic acid and 1,3-butylene glycol and wherein the polyester plasticiser has a molecular weight from about 1500 to about 2000 grams/mole;

(iii) the polymeric plasticiser is a polyester plasticiser formed from adipic acid and propylene glycol and wherein the polyester plasticiser has a molecular weight of about 5000 grams/mole; or,

(iv) the polymeric plasticiser is a polyester plasticiser formed from glutaric acid and propylene glycol and wherein the polyester plasticiser has a molecular weight of from about 1500 to about 2000 grams/mole.

9. A refrigerator gasket made from a composition according to any one of claims 1, 2 and 7.

European
Patent Office

EUROPEAN SEARCH
REPORT

Application Number

EP 91 30 3558

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 595 824 (R D AYLESWORTH ET AL)1971 <br> * column 2, line 27 - line 38 * * * column 3, line 54 - line 72 * * <br> * claims 1-3; examples; table 1 * * <br> – – – | 1,2 | C 08 L 27/06 <br> C 08 J 3/00 |
| A | EP-A-0 134 389 (NIPPON CARBIDE) <br> * page 1, line 1 - line 13 * * * page 1, line 27 - page 2, line 7 * <br> * * page 10, line 11 - page 12, line 20 * * * page 34; table 1 * * <br> * page 38; examples CEX.7,10; tables 4-A,5-A * * * claims 1,5,6 * * <br> – – – | 1,2 | |
| A | EP-A-0 292 599 (NATIONAL DISTILLERS) <br> * page 1, line 1 - page 2, line 11 * * * claims 1,4; examples 5,12,13 * * <br> – – – – – | 1,2 | |
| | | | **TECHNICAL FIELDS SEARCHED (Int. Cl.5)** |
| | | | C 08 L |

The present search report has been drawn up for all claims

| Place of search | Date of completion of search | Examiner |
|---|---|---|
| The Hague | 13 November 91 | ENGEL H.S.L. |